# EUROPÄISCHE PATENTSCHRIFT

(11) **EP 2 078 637 B1**
(45) Veröffentlichungstag und Bekanntmachung des Hinweises auf die Patenterteilung: **05.10.2011**
(21) Anmeldenummer: 09000289.0
(22) Anmeldetag: 12.01.2009
(51) Int. Cl.: B60N 2/46

(54) **Sitzanordnung mit zwei Fahrzeugsitzen in einer Sitzreihe**
Seating assembly with two vehicle seats in a row of seats
Agencement de siège doté de deux sièges de véhicule dans une rangée de sièges

(30) Priorität: 14.01.2008 DE 102008004232
(43) Veröffentlichungstag der Anmeldung: 15.07.2009
(73) Patentinhaber: GM Global Technology Operations LLC, Detroit, MI 48265-3000 (US)
(72) Erfinder: Maier, Jürgen, 67808 Weitersweiler (DE)
(74) Vertreter: Strauss, Peter

(56) Entgegenhaltungen:
- EP-A1- 1 731 351
- DE-U1- 20 000 479

## Beschreibung

Die vorliegende Erfindung betrifft eine Sitzanordnung mit einem ersten und einem zweiten Fahrzeugsitz, die in einer Sitzreihe nebeneinander angeordnet sind und von denen der erste Fahrzeugsitz eine Rückenlehne aufweist, die von einer im Wesentlichen aufrechten Gebrauchsposition in Sitzrichtung nach vorne in eine im Wesentlichen horizontale Nichtgebrauchsposition geschwenkt werden kann, wobei die Rückenlehne mindestens ein höhenverstellbares Polsterteil aufweist, dass in der Nichtgebrauchsposition der Rückenlehne über ein Gelenkviereck mit vier Gelenkachsen von einer unteren Armlehnennichtgebrauchsstellung in eine obere erste Armlehnenstellung zur Ausbildung einer Armlehne für den zweiten Fahrzeugsitz bewegt werden kann.

Aus dem Stand der Technik sind Sitzanordnungen, insbesondere Sitzanordnungen für Kraftfahrzeuge, bekannt, die zwei nebeneinander angeordnete Fahrzeugsitze aufweisen, wobei einer der beiden Fahrzeugsitze eine Rückenlehne aufweist, die nach vorne in eine Nichtgebrauchsposition verschwenkt werden kann. So beschreibt die EP 0 943 483 B1 eine Sitzanordnung mit zumindest zwei nebeneinander angeordneten Sitzen innerhalb einer Sitzreihe eines Kraftfahrzeugs, die alle Merkmale des Oberbegriffs des Anspruchs 1 zeigt. Einer der Sitze weist eine Rückenlehne auf, die aus einer im Wesentlichen aufrechten Gebrauchsposition in Sitzrichtung nach vorne in eine im Wesentlichen horizontale Nichtgebrauchsposition verschwenkt werden kann. Die Rückenlehne setzt sich aus einem mittleren Polsterteil sowie zwei seitlichen höhenverstellbaren Polsterteilen zusammen, die jeweils an einer Seite des mittleren Polsterteils vorgesehen sind. Die beiden höhenverstellbaren Polsterteile sind an einer rückwärtigen Trageplatte des mittleren Polsterteils angeordnet. Die Trageplatte selbst ist über ein Gelenkviereck mit vier Gelenkachsen an der Rückseite des mittleren Polsterteils befestigt, so dass die Trageplatte mitsamt den höhenverstellbaren Polsterteilen von einer unteren Stellung in eine obere Stellung verschwenkt werden kann, wenn sich die Rückenlehne in der nach vorne geklappten Nichtgebrauchsposition befindet. Ferner können anschließend die an der Trageplatte angeordneten höhenverstellbaren Polsterteile jeweils um eine Schwenkachse, die sich in die Sitzrichtung erstreckt, nach oben verschwenkt werden, so dass diese gemeinsam eine Armlehne für einen der benachbart angeordneten Fahrzeugsitze ausbilden. Die Gelenkachsen des Gelenkvierecks erstrecken sich bei der bekannten Sitzanordnung quer bzw. in einem rechten Winkel zur Sitzrichtung.

Die bekannte Sitzanordnung hat sich bewährt, ist jedoch insofern von Nachteil, als dass deren Handhabung insbesondere beim Bewegen der höhenverstellbaren Polsterteile von einer Nichtgebrauchsposition in die Armlehnenposition erschwert ist.

Es ist daher eine Aufgabe der vorliegenden Erfindung, eine Sitzanordnung der gattungsgemäßen Art zu schaffen, bei der die Handhabung des Sitzanordnung, insbesondere das Überführen der höhenverstellbaren Polsterteile von einer Armlehnennichtgebrauchsstellung in eine Armlehnenstellung vereinfacht ist.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Sitzanordnung weist mindestens einen ersten und einen zweiten Fahrzeugsitz auf, die in einer Sitzreihe nebeneinander, d. h. benachbart zueinander, angeordnet sind. Der erste Fahrzeugsitz weist eine Rückenlehne auf, die von einer im Wesentlichen aufrechten Gebrauchsposition, in der der Fahrzeuginsasse auf dem ersten Fahrzeugsitz Platz nehmen kann, in Sitzrichtung nach vorne in eine im Wesentlichen horizontale Nichtgebrauchsposition geschwenkt werden kann. Die Rückenlehne des ersten Fahrzeugsitzes weist mindestens ein höhenverstellbares Polsterteil auf. Das höhenverstellbare Polsterteil kann in der Nichtgebrauchsposition der Rückenlehne über ein Gelenkviereck mit vier Gelenkachsen von einer unteren Armlehnennichtgebrauchsstellung in eine obere erste Armlehnenstellung bewegt werden. In der oberen ersten Armlehnenstellung bildet das höhenverstellbare Polsterteil eine Armlehne für den benachbarten zweiten Fahrzeugsitz aus. Erfindungsgemäß erstrecken sich die Gelenkachsen quer zur Sitzrichtung, sind jedoch gegenüber einer Horizontalen quer zur Sitzrichtung geneigt. Alternativ hierzu erstrecken sich die Gelenkachsen in der Nichtgebrauchsposition der Rückenlehne in die Sitzrichtung.

Bei den beiden alternativen Ausführungen der erfindungsgemäßen Sitzanordnung besteht der Vorteil, dass durch die erfindungsgemäße Anordnung bzw. Orientierung der Gelenkachsen eine Aufwärtsbewegung der höhenverstellbaren Polsterteile gleichzeitig mit einer Seitwärtsbewegung der Polsterteile gekoppelt ist. Hierdurch ist die Handhabung der Polsterteile bei deren Bewegung von der Armlehnennichtgebrauchsstellung in die obere erste Armlehnenstellung vereinfacht, zumal die Polsterteile nicht zunächst nach oben und anschließend zur Seite bewegt werden müssen, um in die erste Armlehnenstellung zu gelangen, wie dies beispielsweise bei der aus der EP 0 943 482 B1 bekannten Sitzanordnung der Fall ist. Die Bedienung ist somit wesentlich komfortabler und einfacher.

In einer bevorzugten Ausführungsform der erfindungsgemäßen Sitzanordnung sind die Gelenkachsen des Gelenkvierecks derart angeordnet, dass das Polsterteil in der ersten Armlehnenstellung quer zur Sitzrichtung weiter von dem zweiten Fahrzeugsitz entfernt ist als in der Armlehnennichtgebrauchsstellung. Hierdurch ist gewährleistet, dass die höhenverstellbaren Polsterteile des ersten Fahrzeugsitzes bei deren Bewegung von der Armlehnennichtgebrauchsstellung in die erste Armlehnenstellung nicht mit einem Bestandteil des benachbarten zweiten Fahrzeugsitzes, wie beispielsweise dessen Sitzteil oder dessen Rückenlehne, kollidieren. Somit können die beiden Fahrzeugsitze sehr eng nebeneinander angeordnet werden, ohne dass dazwischen ein besonders großer Spalt vorgesehen sein müsste. Somit ermöglicht die erfindungsgemäße Sitzanordnung eine besonders enge Aneinanderreihung der benachbarten Fahrzeugsitze innerhalb der Sitzreihe.

In einer weiteren bevorzugten Ausführungsform der erfindungsgemäßen Sitzanordnung sind die Gelenkachsen um einen Winkel von 5° bis 85°, vorzugsweise in einem Winkel von 45°, gegenüber der Horizontalen geneigt. So ist bei einem bevorzugten Winkel von 45° sichergestellt, dass sich das höhenverstellbare Polsterteil bei dessen Bewegung von der Armlehen-Nichtgebrauchsstellung in die obere erste Armlehnenstellung stets um denselben Weg in Höhenrichtung und Querrichtung versetzt wird.

Um eine besonders flexible Nutzung des höhenverstellbaren Polsterteils zu ermöglichen, ist das Polsterteil in einer besonders bevorzugten Ausführungsform der erfindungsgemäßen Sitzanordnung ferner um eine Schwenkachse verschwenkbar an dem Gelenkviereck angeordnet, die sich in der ersten Armlehnenstellung in die Sitzrichtung erstreckt, wobei das Polsterteil von der ersten Armlehnenstellung um die Schwenkachse in eine zweite Armlehnenstellung verschwenkt werden kann.

In einer vorteilhaften Ausführungsform der erfindungsgemäßen Sitzanordnung weist das Polsterteil eine Rückseite und eine Vorderseite auf, wobei die Vorderseite in der Gebrauchsposition der Rückenlehne als Teil einer in Sitzrichtung weisenden Rückenlehnenfläche ausgebildet ist und die Rückseite in der Armlehnenstellung des Polsterteils eine nach oben weisende erste Armlehnenfläche ausbildet.

Gemäß einer weiteren vorteilhaften Ausführungsform der erfindungsgemäßen Sitzanordnung weist das Polsterteil ferner eine dem zweiten Fahrzeugsitz in der Gebrauchsposition zugewandte Außenseite auf, die in der zweiten Armlehnenstellung des Polsterteils eine nach oben weisende zweite Armlehnenfläche ausbildet. So könnten beispielsweise die Rückseite des Polsterteils und die Außenseite des Polsterteils unterschiedlich ausgebildet sein, so dass in der ersten Armlehnenstellung eine weichere oder härtere Armlehnenfläche als in der zweiten Armlehnenstellung des Polsterteils geschaffen wird.

In einer weiteren bevorzugten Ausführungsform der erfindungsgemäßen Sitzanordnung weist die Rückenlehne ferner ein mittleres Polsterteil auf, wobei die einander zugewandten und gegebenenfalls aneinander angrenzenden Seiten des mittleren Polsterteils und des höhenverstellbaren Polsterteils gegenüber der Rückenlehnenfläche schräggestellt sind. Dabei beträgt der Schrägstellungswinkel vorzugsweise zwischen 5° und 85°. Besonders bevorzugt ist jedoch ein Winkel von 45°. In jedem Fall ermöglicht die Schrägstellung gegenüber der Rückenlehnenfläche, die eine Quererstreckung in einem Winkel von 90° ausschließt, dass die höhenverstellbaren Polsterteile über das Gelenkviereck von der Armlehnennichtgebrauchsstellung in die obere erste Armlehnenstellung bewegt werden können, ohne dass diese mit dem mittleren Polsterteil kollidieren. Die Schrägstellung der Gelenkachsen gegenüber der Horizontalen sollte dabei der Schrägstellung der einander zugewandten Seiten der Polsterteile entsprechen.

In einer weiteren bevorzugten Ausführungsform der erfindungsgemäßen Sitzanordnung weist der erste Fahrzeugsitz zwei als Flügellehnen ausgebildete höhenverstellbare Polsterteile auf, wobei das eine Polsterteil dem zweiten Fahrzeugsitz und das andere Polsterteil dem dritten Fahrzeugsitz zugewandt ist, während der erste Fahrzeugsitz zwischen dem zweiten und dritten Fahrzeugsitz angeordnet ist. Bei dieser Ausführungsform können die beiden höhenverstellbaren Polsterteile unabhängig voneinander über das zugehörige Gelenkviereck von der Armlehnennichtgebrauchsstellung in die obere erste oder zweite Armlehnenstellung bewegt werden. Demgegenüber ermöglicht die aus der EP 0 943 482 B1 bekannte Sitzanordnung lediglich ein gemeinsames Bewegen der beiden Polsterteile in die erste Armlehnenstellung, selbst wenn einer der Fahrzeuginsassen auf dem zweiten oder dritten Fahrzeugsitz eine solche Armlehne nicht benötigt oder diese gar als störend empfindet. Somit ist eine wesentlich flexiblere Nutzung der Polsterteile möglich.

Gemäß einer weiteren bevorzugten Ausführungsform der erfindungsgemäßen Sitzanordnung liegen die Rückseiten der beiden Polsterteile in der zweiten Armlehnenstellung aneinander an. So können die beiden Polsterteile in der zweiten Armlehnenstellung beispielsweise eine zusammenhängende Armlehnenfläche ausbilden, so dass sowohl für den ersten als auch für den zweiten Fahrzeugsitz eine größere und zusammenhängende Armlehnenfläche erzeugt werden kann.

In einer weiteren vorteilhaften Ausführungsform der erfindungsgemäßen Sitzanordnung weist das Gelenkviereck einen ersten Schwenkhebel, der einerseits um eine erste Gelenkachse verschwenkbar an der Rückenlehne und andererseits um eine zweite Gelenkachse verschwenkbar an dem Polsterteil angeordnet ist, und einen zweiten Schwenkhebel auf, der einerseits um eine dritte Gelenkachse verschwenkbar an der Rückenlehne und andererseits um eine vierte Gelenkachse verschwenkbar an dem Polsterteil angeordnet ist. Sowohl die erste und die dritte Gelenkachse als auch die zweite und die vierte Gelenkachse können dabei beispielsweise an einem gemeinsamen Tragteil vorgesehen sein, das an der Rückenlehne bzw. an dem Polsterteil angeordnet ist.

Grundsätzlich sollten der erste und zweite Schwenkhebel die gleiche Länge aufweisen, so dass der Abstand zwischen der ersten Gelenkachse und der zweiten Gelenkachse sowie der Abstand zwischen der dritten Gelenkachse und der vierten Gelenkachse derselbe ist. Dies hat den Vorteil, dass für den ersten und zweiten Schwenkhebel jeweils dieselben Bauteile verwendet werden können. Sollte jedoch beispielsweise eine Neigung des Polsterteils in der ersten oder zweiten Armlehnenstellung gewünscht sein, so weisen der erste und zweite Schwenkhebel in einer weiteren bevorzugten Ausführungsform der erfindungsgemäßen Sitzanordnung unterschiedliche Längen auf. So könnte beispielsweise der in Sitzrichtung weiter vorne angeordnete Schwenkhebel länger als der in Sitzrichtung weiter hinten angeordnete Schwenkhebel ausgebildet sein, so dass das Polsterteil in der ersten oder zweiten Armlehnenstellung in Sitzrichtung nach oben geneigt ist.

In einer weiteren vorteilhaften Ausführungsform der erfindungsgemäßen Sitzanordnung sind die Gelenkachsen eines Gelenkvierecks parallel zueinander angeordnet.

Gemäß einer weiteren vorteilhaften Ausführungsform der erfindungsgemäßen Sitzanordnung sind die Gelenkachsen eines Gelenkvierecks in einem rechten Winkel zu der Sitzrichtung angeordnet.

Die Erfindung wird im Folgenden anhand von beispielhaften Ausführungsformen unter Bezugnahme auf die beigefügten Zeichnungen näher erläutert. Es zeigen:
- Fig. 1: eine schematische Vorderansicht der erfindungsgemäßen Sitzanordnung mit der Rückenlehne in der Gebrauchsposi- tion,
- Fig. 2: die Sitzanordnung von Fig. 1 in einer ersten Ausführungsform mit der Rück- enlehne in der Nichtgebrauchspositi- on,
- Fig. 3: eine Seitenansicht der Sitzanordnung von Fig. 2,
- Fig. 4: die Sitzanordnung von Fig. 2 mit den Polsterteilen in einer ersten Armleh- nenstellung,
- Fig. 5: eine Seitenansicht der Sitzanordnung von Fig. 4,
- Fig. 6: die Sitzanordnung von Fig. 4 mit den Polsterteilen in einer zweiten Arm- lehnenstellung,
- Fig. 7: die Sitzanordnung von Fig. 1 in einer zweiten Ausführungsform mit der Rück- enlehne in der Nichtgebrauchspositi- on,
- Fig. 8: die Sitzanordnung von Fig. 7 mit den Polsterteilen in einer ersten Armleh- nenstellung und
- Fig. 9: die Sitzanordnung von Fig. 8 mit den Polsterteilen in einer zweiten Arm- lehnenstellung.

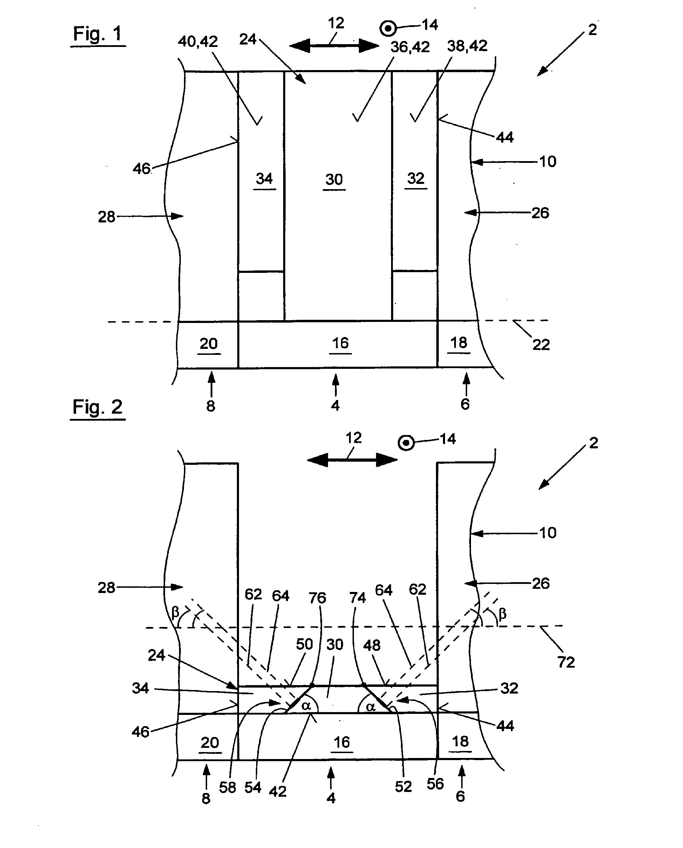

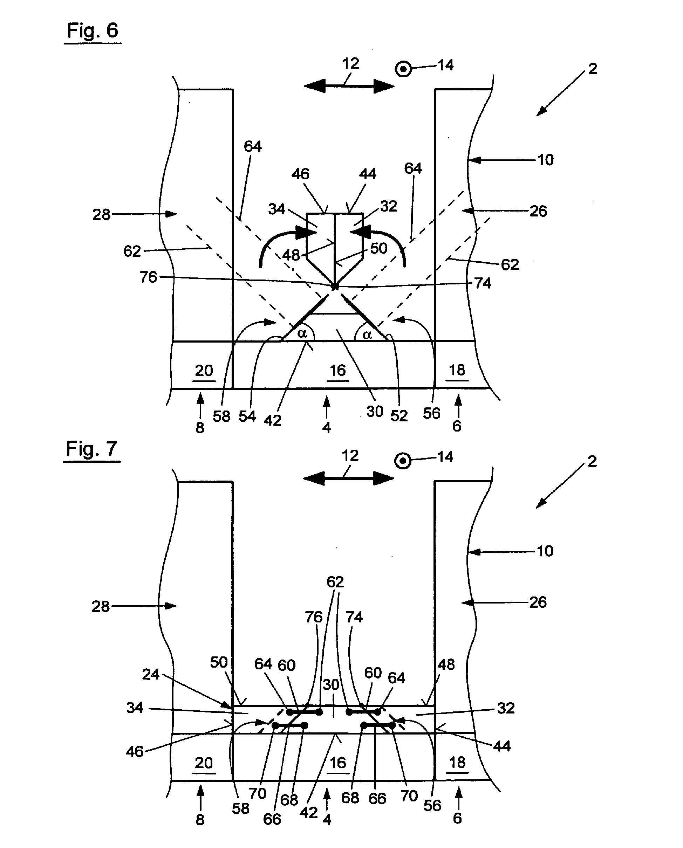

Fig. 1 zeigt eine Vorderansicht der erfindungsgemäßen Sitzanordnung 2, die sowohl für die erste Ausführungsform gemäß den Fig. 2 bis 6 als auch für die zweite Ausführungsform gemäß den Fig. 7 bis 9 gilt. Die erfindungsgemäße Sitzanordnung 2 umfasst einen ersten Fahrzeugsitz 4, einen zweiten Fahrzeugsitz 6 und einen dritten Fahrzeugsitz 8, die in einer Sitzreihe 10 in Querrichtung 12 nebeneinander angeordnet sind. Dabei ist der erste Fahrzeugsitz 4 zwischen dem zweiten Fahrzeugsitz 6 und dem dritten Fahrzeugsitz 8 angeordnet, wobei die Sitzrichtung 14 der Fahrzeugsitze 4, 6, 8 identisch ist. Die Sitzrichtung 14 entspricht in Fig. 1 der Normalen des Zeichnungsblattes.

Die Fahrzeugsitze 4, 6, 8 umfassen jeweils ein Sitzteil 16, 18, 20 sowie eine um eine Schwenkachse 22 verschwenkbar an dem Sitzteil 16, 18, 20 angeordnete Rückenlehne 24, 26, 28. Die Rückenlehnen 24, 26, 28 können unabhängig voneinander um die Schwenkachse 22 verschwenkt werden. Die Rückenlehne 24 des ersten Fahrzeugsitzes 4 setzt sich im Wesentlichen aus einem mittleren Polsterteil 30, sowie aus zwei höhenverstellbaren Polsterteilen 32, 34 zusammen, wobei auf die Höhenverstellung später näher eingegangen wird. Die höhenverstellbaren Polsterteile 32, 34 sind als so genannte Flügellehnen ausgebildet, wobei das eine Polsterteil 32 dem zweiten Fahrzeugsitz 6 und das andere Polsterteil 34 dem dritten Fahrzeugsitz 8 zugewandt ist.

Die Vorderseite 36 des mittleren Polsterteils 30 bildet zusammen mit den Vorderseiten 38, 40 der höhenverstellbaren Polsterteile 32, 34 eine gemeinsame Rückenlehnenfläche 42 aus, wenn sich die Rückenlehne 24 in der in Fig. 1 gezeigten Gebrauchsposition befindet. Darüber hinaus weist das Polsterteil 32 eine dem zweiten Fahrzeugsitz zugewandte Außenseite 44 auf, während das andere Polsterteil 34 eine dem dritten Fahrzeugsitz 8 zugewandte Außenseite 46 aufweist. Des Weiteren weisen die Polsterteile 32, 34 jeweils eine Rückseite 48, 50 auf, die der entsprechenden Vorderseite 38, 40 abgewandt und in Fig. 1 nicht zu sehen ist.

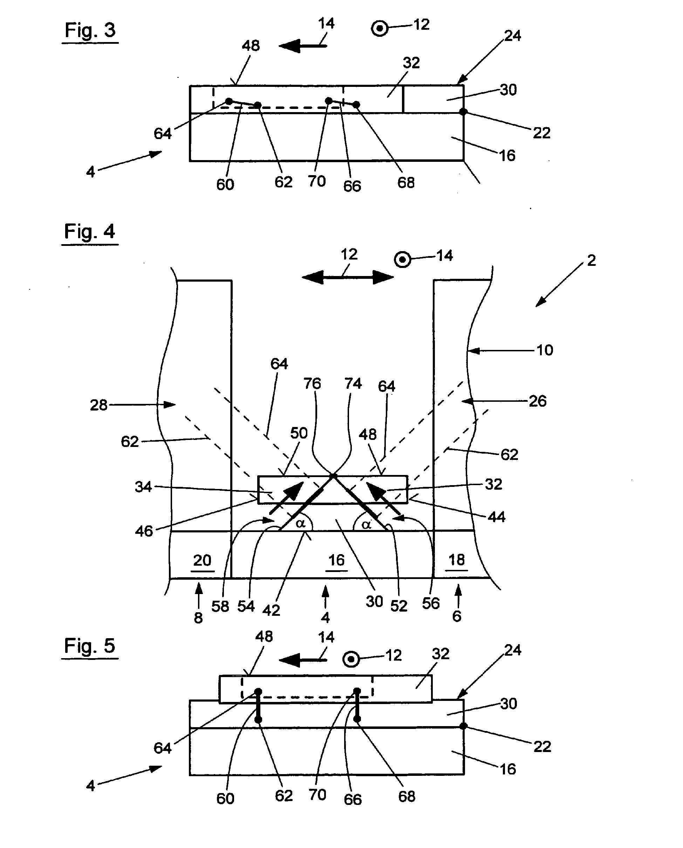

Bezug nehmend auf die Fig. 2 bis 6 wird nachstehend eine erste Ausführungsform der Sitzanordnung 2 von Fig. 1 beschrieben. In Fig. 2 ist die Rückenlehne 24 des ersten Fahrzeugsitzes 4 um die Schwenkachse 22 in Sitzrichtung 14 nach vorne auf das entsprechende Sitzteil 16 verschwenkt, so dass sich die Rückenlehne 24 in einer im Wesentlichen horizontalen Nichtgebrauchsposition befindet. Wie aus Fig. 2 ersichtlich, sind die einander zugewandten und aneinander angrenzenden Seiten 52, 54 des mittleren Polsterteils 30 und der höhenverstellbaren Polsterteile 32 bzw. 34 gegenüber der Rückenlehnenfläche 42 der Rückenlehne 24 des ersten Fahrzeugsitzes 4 in einem Winkel α schräggestellt. In der vorliegenden Ausführungsform beträgt der Winkel α = 45°, wobei dieser Winkel α grundsätzlich zwischen 5° und 85° betragen sollte. Zwischen den Seiten 52 bzw. 54 ist ferner jeweils ein Gelenkviereck 56 bzw. 58 vorgesehen, das nachstehend unter Bezugnahme auf Fig. 3 eingehender beschrieben wird.

Das Gelenkviereck 56 weist einen in Sitzrichtung 14 vorderen ersten Schwenkhebel 60, der einerseits um eine erste Gelenkachse 62 verschwenkbar an der Rückenlehne 24 bzw. dem mittleren Polsterteil 30 und andererseits um eine zweite Gelenkachse 64 verschwenkbar an dem Polsterteil 32 angeordnet ist, und einen zweiten Schwenkhebel 66 auf, der einerseits um eine dritte Gelenkachse 68 verschwenkbar an der Rückenlehne 24 bzw. dem mittleren Polsterteil 30 und andererseits um eine vierte Gelenkachse 70 verschwenkbar an dem Polsterteil 32 angeordnet ist. Die erste, zweite, dritte und vierte Gelenkachse 62, 64, 68, 70 bilden in der Seitenansicht von Fig. 3 das Gelenkviereck 56 aus, wobei die zweite Gelenkachse 64 und die vierte Gelenkachse 70 an einem gemeinsamen Tragteil angeordnet sein können, das wiederum an dem Polsterteil 32 befestigt ist, wie dies in Fig. 3 anhand der gestrichelten Linie angedeutet ist.

Um später eine geneigte Armlehne zu erhalten, kann der erste Schwenkhebel 60 kürzer oder länger als der zweite Schwenkhebel 66 ausgebildet sein, die vorliegende Beschreibung beschränkt sich jedoch auf eine Ausführungsform, bei der der erste Schwenkhebel 60 und der zweite Schwenkhebel 66 dieselbe Länge aufweisen, so dass der Abstand zwischen der ersten Gelenkachse und der zweiten Gelenkachse 62, 64 und der Abstand zwischen der dritten Gelenkachse und der vierten Gelenkachse 68, 70 derselbe ist.

Die Gelenkachsen 62, 64, 68, 70 des Gelenkvierecks 56 sind parallel zueinander angeordnet und erstrecken sich in einem rechten Winkel zu der Sitzrichtung 14. Dennoch sind die Gelenkachsen 62, 64, 68, 70 gegenüber einer Horizontalen 72, die sich in Querrichtung 12 quer zur Sitzrichtung 14 erstreckt und in Fig. 2 angedeutet ist, um einen Winkel β geneigt, wobei der Winkel in dieser Ausführungsform β = 45° ist und somit dem vorbeschriebenen Winkel α entspricht. Die vorstehend gemachten Ausführungen zu dem Gelenkviereck 56 gelten entsprechend für das Gelenkviereck 58, wobei dieses - wie aus Fig. 2 ersichtlich - lediglich spiegelverkehrt angeordnet ist.

Die höhenverstellbaren Polsterteile 32, 34 sind darüber hinaus um eine Schwenkachse 74 bzw. 76 verschwenkbar an dem entsprechenden Gelenkviereck 56 bzw. 58 oder einem entsprechenden Tragteil des Gelenkvierecks 56 bzw. 58 angeordnet, wobei sich die Schwenkachse 74, 76 in der dargestellten Nichtgebrauchsposition der Rückenlehne 24 bzw. in der später näher erläuterten ersten Armlehnenstellung der Polsterteile 32, 34 in die Sitzrichtung 14 erstreckt.

Nachstehend werden weitere Merkmale der Sitzanordnung 2 in der ersten Ausführungsform sowie deren Funktionsweise unter Bezugnahme auf die Fig. 2 bis 6 näher erläutert. Dank der Gelenkvierecke 56, 58 können die Polsterteile 32, 34 von der in Fig. 2 gezeigten unteren Armlehnennichtgebrauchsstellung in eine obere erste Armlehnenstellung bewegt werden, die in den Fig. 4 und 5 gezeigt ist. Zwar wurden die Polsterteile 32, 34 in den Fig. 4 und 5 gleichzeitig in die obere erste Armlehnenstellung bewegt, jedoch können diese auch unabhängig voneinander in die obere erste Armlehnenstellung bewegt werden. Aufgrund der Neigung der Gelenkachsen 62, 64, 68, 70 der Gelenkvierecke 56, 58 werden die Polsterteile 32, 34 beim Anheben gleichzeitig in Querrichtung 12 bewegt, wie dies in Fig. 4 anhand der Pfeile angedeutet ist. So ist das Polsterteil 32 in der ersten Armlehnenstellung weiter von dem zweiten Fahrzeugsitz 6 in Querrichtung entfernt als in der Armlehnennichtgebrauchsstellung von den Fig. 2 und 3. Des Weiteren ist das Polsterteil 34 in der ersten Armlehnenstellung in Querrichtung 12 weiter von dem dritten Fahrzeugsitz 8 entfernt als in der Armlehnennichtgebrauchsstellung.

Der in Fig. 4 angedeutete Bewegungsablauf hat den Vorteil, dass eine Kollision der bewegten Polsterteile 32, 34 mit einem Teil des jeweils benachbarten Fahrzeugsitzes 6, 8 weitgehend ausgeschlossen ist, so dass eine relativ eng beieinander liegende Anordnung der Fahrzeugsitze 4, 6, 8 in Querrichtung 12 möglich ist. Darüber hinaus wird die erste Armlehnenstellung durch Kopplung der Bewegungen in Höhenrichtung und Querrichtung 12 besonders schnell erreicht, so dass die Handhabung der Polsterteile 32, 34 nachhaltig vereinfacht ist. In der ersten Armlehnenstellung bilden die Rückseiten 48, 50 der Polsterteile 32, 34 jeweils eine nach oben weisende erste Armlehnenfläche aus, so dass sowohl für den zweiten Fahrzeugsitz 6 als auch für den dritten Fahrzeugsitz 8 jeweils eine Armlehne geschaffen wurde.

Sollte eine besonders hohe Armlehnenfläche gewünscht sein, so können die Polsterteile 32, 34 von der ersten Armlehnenstellung in den Fig. 4 und 5 um die jeweilige Schwenkachse 74 bzw. 76 nach oben in eine zweite Armlehnenstellung verschwenkt werden, die in Fig. 6 gezeigt ist. In der zweiten Armlehnenstellung der Polsterteile 32, 34 bilden die Außenseiten 44, 46 der Polsterteile 32, 34 eine nach oben weisende zweite Armlehnenfläche aus, während die Rückseiten 48, 50 der beiden Polsterteile 32, 34 in der zweiten Armlehnenstellung aneinander anliegen. Auch hierbei gilt, dass die Polsterteile 32, 34 unabhängig voneinander von der ersten Armlehnenstellung in die zweite Armlehnenstellung verschwenkt werden können.

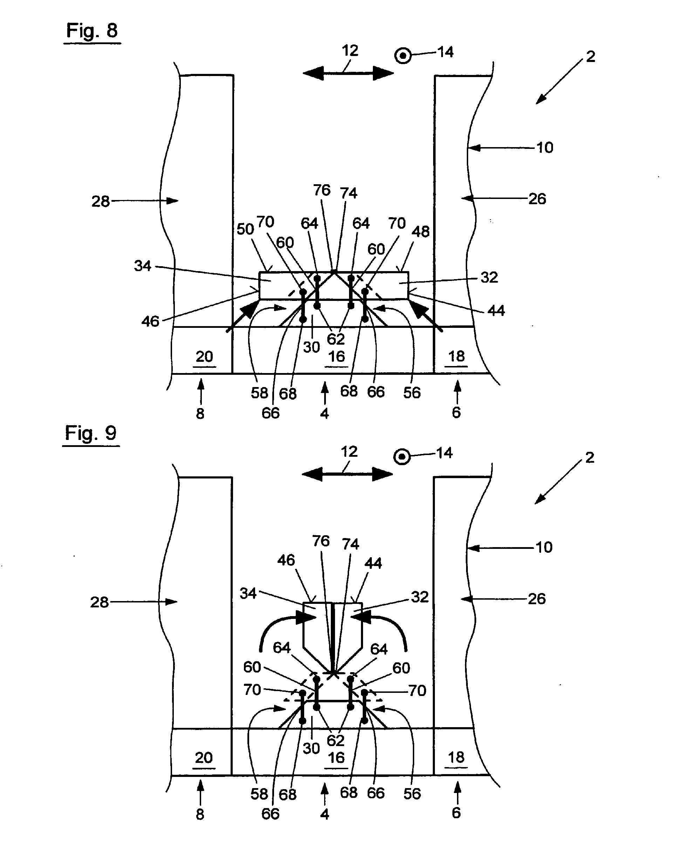

Nachstehend wird unter Bezugnahme auf die Fig. 7 bis 9 eine zweite Ausführungsform der Sitzanordnung 2 von Fig. 1 beschrieben, wobei lediglich auf die Unterschiede zur zweiten Ausführungsform eingegangen wird und die obige Beschreibung ansonsten entsprechend gilt. Im Gegensatz zur ersten Ausführungsform erstrecken sich die Gelenkachsen 62, 64, 68, 70 nicht in Querrichtung 12 quer zur Sitzrichtung 14, sondern in die Sitzrichtung 14, wenn sich die Rückenlehne 24 in der in Fig. 7 gezeigten Nichtgebrauchsposition befindet. Durch das Anheben der Polsterteile 32, 34 werden diese wiederum sowohl in Höhenrichtung als auch in Querrichtung 12 versetzt, wie dies in Fig. 8 anhand der Pfeile angedeutet ist, wobei Fig. 8 die Polsterteile 32, 34 in der ersten Armlehnenstellung zeigt. Anschließend können die Polsterteile 32, 34 wiederum um die zugehörigen Schwenkachsen 74 bzw. 76 nach oben in die in Fig. 9 gezeigte zweite Armlehnenstellung verschwenkt werden.

Auch bei der zweiten Ausführungsform ist ein kollisionsfreies Bewegen der Polsterteile 32, 34 in die erste und zweite Armlehnenstellung möglich, wobei die erste Armlehnenstellung besonders schnell und einfach erreicht werden kann.

### Bezugszeichenliste

- 2: Sitzanordnung
- 4: erster Fahrzeugsitz
- 6: zweiter Fahrzeugsitz
- 8: dritter Fahrzeugsitz
- 10: Sitzreihe
- 12: Querrichtung
- 14: Sitzrichtung
- 16: Sitzteil
- 18: Sitzteil
- 20: Sitzteil
- 22: Schwenkachse
- 24: Rückenlehne
- 26: Rückenlehne
- 28: Rückenlehne
- 30: mittleres Polsterteil
- 32: höhenverstellbares Polsterteil
- 34: höhenverstellbares Polsterteil
- 36: Vorderseite
- 38: Vorderseite
- 40: Vorderseite
- 42: Rückenlehnenfläche
- 44: Außenseite
- 46: Außenseite
- 48: Rückseite
- 50: Rückseite
- 52: Seite
- 54: Seite
- 56: Gelenkviereck
- 58: Gelenkviereck
- 60: erster Schwenkhebel
- 62: erste Gelenkachse
- 64: zweite Gelenkachse
- 66: zweiter Schwenkhebel
- 68: dritte Gelenkachse
- 70: vierte Gelenkachse
- 72: Horizontale
- 74: Schwenkachse
- 76: Schwenkachse

- α: Winkel
- β: Winkel

## Patentansprüche

1. Sitzanordnung (2) mit einem ersten und einem zweiten Fahrzeugsitz(4, 6), die in einer Sitzreihe (10) nebeneinander angeordnet sind und von denen der erste Fahrzeugsitz (4) eine Rückenlehne (24) aufweist, die von einer im Wesentlichen aufrechten Gebrauchsposition in Sitzrichtung (14) nach vorne in eine im Wesentlichen horizontale Nichtgebrauchsposition schwenkbar ist, wobei die Rückenlehne (24) mindestens ein höhenverstellbares Polsterteil (32) aufweist, das in der Nichtgebrauchsposition der Rückenlehne (24) über ein Gelenkviereck (56) mit vier Gelenkachsen (62, 64, 68, 70) von einer unteren Armlehnennichtgebrauchsstellung in eine obere erste Armlehnenstellung zur Ausbildung einer Armlehne für den zweiten Fahrzeugsitz (6) bewegbar ist,
**dadurch gekennzeichnet, dass** sich die Gelenkachsen (62, 64, 68, 70) quer zur Sitzrichtung (14) erstrecken und gegenüber einer Horizontalen (72) quer zur Sitzrichtung (14) geneigt sind
oder dass sich die Gelenkachsen (62, 64, 68, 70) in der Nichtgebrauchsposition der Rückenlehne (24) in Sitzrichtung (14) erstrecken.

2. Sitzanordnung (2) nach Anspruch 1, **dadurch gekennzeichnet, dass** die Gelenkachsen (62, 64, 68, 70) des Gelenkvierecks (56) derart angeordnet sind, dass das Polsterteil (32) in der ersten Armlehnenstellung quer zur Sitzrichtung (14) weiter von dem zweiten Fahrzeugsitz (6) entfernt ist als in der Armlehnennichtgebrauchsstellung.

3. Sitzanordnung (2) nach einem der Ansprüche 1 oder 2, **dadurch gekennzeichnet, dass** die Gelenkachsen (62, 64, 68, 70) um einen Winkel (β) von 5° bis 85°, vorzugsweise in einem Winkel (β) von 45°, gegenüber der Horizontalen (72) geneigt sind.

4. Sitzanordnung (2) nach einem der Ansprüche 1 bis 3, **dadurch gekennzeichnet, dass** das Polsterteil (32) ferner um eine Schwenkachse (74) verschwenkbar an dem Gelenkviereck (56) angeordnet ist, die sich in der ersten Armlehnenstellung in die Sitzrichtung (14) erstreckt, wobei das Polsterteil (32) von der ersten Armlehnenstellung um die Schwenkachse (74) in eine zweite Armlehnenstellung verschwenkbar ist.

5. Sitzanordnung (2) nach einem der vorangehenden Ansprüche, **dadurch gekennzeichnet, dass** das Polsterteil (32) eine Rückseite (48) und eine Vorderseite (38) aufweist, wobei die Vorderseite (38) in der Gebrauchsposition der Rückenlehne (24) als Teil einer in Sitzrichtung (14) weisenden Rückenlehnenfläche (42) ausgebildet ist und die Rückseite (48) in der ersten Armlehnenstellung des Polsterteils (32) eine nach oben weisende erste Armlehnenfläche ausbildet.

6. Sitzanordnung (2) nach Anspruch 5, **dadurch gekennzeichnet, dass** das Polsterteil (32) ferner eine dem zweiten Fahrzeugsitz (6) in der Gebrauchsposition zugewandte Außenseite (44) aufweist, die in der zweiten Armlehnenstellung des Polsterteils (32) eine nach oben weisende zweite Armlehnenfläche ausbildet.

7. Sitzanordnung (2) nach einem der vorangehenden Ansprüche, **dadurch gekennzeichnet, dass** die Rückenlehne (24) ferner ein mittleres Polsterteil (30) aufweist, wobei die einander zugewandten und gegebenenfalls aneinander angrenzenden Seiten (52) des mittleren Polsterteils (30) und des höhenverstellbaren Polsterteils (32) gegenüber der Rückenlehnenfläche (42), vorzugsweise in einem Winkel (α) zwischen 5° und 85°, besonders bevorzugt in einem Winkel (α) von 45°, schräggestellt sind.

8. Sitzanordnung (2) nach einem der vorangehenden Ansprüche, **dadurch gekennzeichnet, dass** der erste Fahrzeugsitz (4) zwei als Flügellehnen ausgebildete höhenverstellbare Polsterteile (32, 34) aufweist, wobei das eine Polsterteil (32) dem zweiten Fahrzeugsitz (6) und das andere Polsterteil (34) einem dritten Fahrzeugsitz (8) zugewandt ist und der erste Fahrzeugsitz (4) zwischen dem zweiten und dritten Fahrzeugsitz (6, 8) angeordnet ist.

9. Sitzanordnung (2) nach Anspruch 8, **dadurch gekennzeichnet, dass** die Rückseiten (48, 50) der beiden Polsterteile (32, 34) in der zweiten Armlehnenstellung aneinander anliegen.

10. Sitzanordnung (2) nach einem der vorangehenden Ansprüche, **dadurch gekennzeichnet, dass** das Gelenkviereck (56) einen ersten Schwenkhebel (60) , der einerseits um eine erste Gelenkachse (62) verschwenkbar an der Rückenlehne (24) und andererseits um eine zweite Gelenkachse (64) verschwenkbar an dem Polsterteil (32) angeordnet ist, und einen zweiten Schwenkhebel (66) aufweist, der einerseits um eine dritte Gelenkachse (68) verschwenkbar an der Rückenlehne (24) und andererseits um eine vierte Gelenkachse (70) verschwenkbar an dem Polsterteil (32) angeordnet ist.

11. Sitzanordnung (2) nach Anspruch 10, **dadurch gekennzeichnet, dass** der erste und zweite Schwenkhebel (60, 66) unterschiedliche Längen aufweisen.

12. Sitzanordnung (2) nach einem der vorangehenden Ansprüche, **dadurch gekennzeichnet, dass** die Gelenkachsen (62, 64, 68, 70) eines Gelenkvierecks (56) parallel zueinander angeordnet sind.

13. Sitzanordnung (2) nach einem der vorangehenden Ansprüche, **dadurch gekennzeichnet, dass** die Gelenkachsen (62, 64, 68, 70) eines Gelenkvierecks (56) in einem rechten Winkel zu der Sitzrichtung (14) angeordnet sind.

## Claims

1. A seating arrangement (2), comprising a first and second vehicle seat (4, 6) which are arranged in one row of seats (10) adjacent to one another and of which the first vehicle seat (4) comprises a backrest (24), which can be pivoted from a substantially upright usage position forward in the seat direction (14) into a substantially horizontal unused position, with the backrest (24) having at least one height-adjustable upholstery part (32) which is movable in the unused position of the backrest (24) via a four-bar linkage (56) with four joint axes (62, 64, 68, 70) from a lower unused position of the armrest to an upper first armrest position for forming an armrest for the second vehicle seat (6), **characterized in that** the joint axes (62, 64, 68, 70) extend transversely to the seat direction (14) and are inclined transversely to the seat direction (14) in relation to a horizontal line (72), or the joint axes (62, 64, 68, 70) extend in the unused position of the backrest (24) in the seat direction (14).

2. A seating arrangement (2) according to claim 1, **characterized in that** the joint axes (62, 64, 68, 70) of the four-bar linkage (56) are arranged in such a way that the upholstery part (32) is farther remote from the second vehicle seat (6) in the first armrest position transversely to the seat direction (14) than in the unused position of the armrest.

3. A seating arrangement (2) according to one of the claims 1 or 2, **characterized in that** the joint axes (62, 64, 68, 70) are inclined by an angle (β) of 5° to 85°, preferably an angle (β) of 45°, in relation to the horizontal line (72).

4. A seating arrangement (2) according to one of the claims 1 to 3, **characterized in that** the upholstery part (32) is further pivotably arranged about a pivot axis (74) on the four-bar linkage (56) which extends in the first armrest position in the seat direction (14), with the upholstery part (32) being pivotable about the pivot axis (74) from the first armrest position to a second armrest position.

5. A seating arrangement (2) according to one of the preceding claims, **characterized in that** the upholstery part (32) comprises a rear side (48) and a front side (38), with the front side (38) being arranged in the usage position of the backrest (24) as a part of a backrest surface (42) facing in the seat direction (14) and the rear side (48) forms an upwardly facing first armrest surface in the first armrest position of the upholstery part (32).

6. A seating arrangement (2) according to claim 5, **characterized in that** the upholstery part (32) further comprises an exterior (44) facing the second vehicle seat (6) in the usage position, which exterior (44) forms an upwardly facing second armrest surface in the second armrest position of the upholstery part (32).

7. A seating arrangement (2) according to one of the preceding claims, **characterized in that** the backrest (24) further comprises a middle upholstery part (30), with the mutually facing and optionally adjacent sides (52) of the middle upholstery part (30) and the height-adjustable upholstery part (32) being inclined relative to the backrest surface (42), preferably at an angle (α) of between 5° and 85°, especially preferably at an angle (α) of 45°.

8. A seating arrangement (2) according to one of the preceding claims, **characterized in that** the first vehicle seat (4) comprises two height-adjustable upholstery parts (32, 34) which are arranged as wings, with the one upholstery part (32) facing the second vehicle seat (6) and the other upholstery part (34) facing a third vehicle seat (8) and with the first vehicle seat (4) being arranged between the second and third vehicle seat (6, 8).

9. A seating arrangement (2) according to claim 8, **characterized in that** the rear sides (48, 50) of the two upholstery parts (32, 34) rest on each other in the second armrest position.

10. A seating arrangement (2) according to one of the preceding claims, **characterized in that** the four-bar linkage (56) comprises a first pivoting lever (60) which is pivotably arranged on the one hand about a first joint axis (62) on the backrest (24) and pivotably arranged on the other hand about a second joint axis (64) on the upholstery part (32), and a second pivoting lever (66) which is pivotably arranged on the one hand about a third joint axis (68) on the backrest (24) and pivotably arranged on the other hand about a fourth joint axis (70) on the upholstery part (32).

11. A seating arrangement (2) according to claim 10, **characterized in that** the first and second pivoting lever (60, 66) have different lengths.

12. A seating arrangement (2) according to one of the preceding claims, **characterized in that** the joint axes (62, 64, 68, 70) of a four-bar linkage (56) are arranged parallel with respect to each other.

13. A seating arrangement (2) according to one of the preceding claims, **characterized in that** the joint axes (62, 64, 68, 70) of a four-bar linkage (56) are arranged at a right angle in relation to the seat direction (14).

## Revendications

1. Disposition de sièges (2) avec un premier siège de véhicule et un deuxième (4, 6) disposés l'un à côté de l'autre dans une rangée de sièges (10) et parmi lesquels le premier siège de véhicule (4) présente un dossier (24) qui peut basculer vers l'avant dans la direction des sièges (14) d'une position d'utilisation sensiblement verticale à une position de non-utilisation sensiblement horizontale, le dossier (24) présentant au moins une partie rembourrée (32) réglable en hauteur, qui peut être déplacée dans la position de non-utilisation du dossier (24) par un quadrilatère articulé (56) à quatre axes d'articulation (62, 64, 68, 70) d'une position inférieure de non-utilisation de l'accoudoir à une première position haute de l'accoudoir pour former un accoudoir pour le deuxième siège de véhicule (6),
**caractérisée en ce que** les axes d'articulation (62, 64, 68, 70) s'étendent transversalement par rapport à la direction des sièges (14) et sont inclinés par rapport à l'horizontale (72) dans le sens transversal par rapport à la direction des sièges (14)
ou **en ce que** les axes d'articulation (62, 64, 68, 70) s'étendent dans la direction des sièges (14) dans la position de non-utilisation du dossier.

2. Disposition de sièges (2) selon la revendication 1, **caractérisée en ce que** les axes d'articulation (62, 64, 68, 70) du quadrilatère articulé (56) sont disposés de telle façon que la partie rembourrée (32) soit plus éloignée du deuxième siège de véhicule (6) dans le sens transversal par rapport à la direction des sièges (14) dans la première position de l'accoudoir que dans la position de non-utilisation de l'accoudoir.

3. Disposition de sièges (2) selon l'une des revendications 1 ou 2, **caractérisée en ce que** les axes d'articulation (62, 64, 68, 70) sont inclinés par rapport à l'horizontale (72) selon un angle (β) de 5° à 85°, de préférence selon un angle (β) de 45°.

4. Disposition de sièges (2) selon l'une des revendications 1 à 3, **caractérisée en ce que** la partie rembourrée (32) est en outre disposée au niveau du quadrilatère articulé (56) de façon à pouvoir basculer autour d'un axe de basculement (74) qui s'étend dans la direction des sièges (14) dans la première position de l'accoudoir, la partie rembourrée (32) pouvant basculer autour de l'axe de basculement (74) à partir de la première position de l'accoudoir vers une deuxième position de l'accoudoir.

5. Disposition de sièges (2) selon l'une des revendications précédentes, **caractérisé en ce que** la partie rembourrée (32) présente une face arrière (48) et une face avant (38), la face avant (38) étant conformée dans la position d'utilisation du dossier (24) comme une partie d'une surface de dossier (42) orientée dans la direction des sièges (14) et la face arrière (48) formant dans la première position de l'accoudoir de la partie rembourrée (32) une première surface d'accoudoir orientée vers le haut.

6. Disposition de sièges (2) selon la revendication 5, **caractérisé en ce que** la partie rembourrée (32) présente en outre une face extérieure (44) orientée vers le deuxième siège de véhicule (6) dans la position d'utilisation, qui forme dans la deuxième position de l'accoudoir de la partie rembourrée (32) une deuxième surface d'accoudoir orientée vers le haut.

7. Disposition de sièges (2) selon l'une des revendications précédentes, **caractérisée en ce que** le dossier (24) présente en outre une partie rembourrée centrale (30), les côtés (52) tournés l'un vers l'autre et éventuellement contigus de la partie rembourrée centrale (30) et de la partie rembourrée réglable en hauteur (32) étant obliques par rapport à la surface de dossier (42), de préférence selon un angle (α) compris entre 5° et 85°, en particulier selon un angle (α) de 45°.

8. Disposition de sièges (2) selon l'une des revendications précédentes, **caractérisée en ce que** le premier siège de véhicule (4) présente deux parties rembourrées réglables en hauteur (32, 34) réalisées comme un dossier enveloppant, une partie rembourrée (32) étant tournée vers le deuxième siège de véhicule (6) et l'autre partie rembourrée (34) vers un troisième siège de véhicule (8) et le premier siège de véhicule (4) étant disposé entre le deuxième siège de véhicule et le troisième (6, 8).

9. Disposition de sièges (2) selon la revendication 8, **caractérisée en ce que** les faces arrière (48, 50) des deux parties rembourrées (32, 34) reposent l'une sur l'autre dans la deuxième position de l'accoudoir.

10. Disposition de sièges (2) selon l'une des revendications précédentes, **caractérisée en ce que** le quadrilatère articulé (56) présente un premier levier pivotant (60), qui est disposé de façon à pouvoir pivoter d'une part autour d'un premier axe d'articulation (62) sur le dossier (24) et d'autre part autour d'un deuxième axe d'articulation (64) sur la partie rembourrée (32), et un deuxième levier pivotant (66) qui est disposé de façon à pouvoir pivoter d'une part autour d'un troisième axe d'articulation (68) sur le dossier (24) et d'autre part autour d'un quatrième axe d'articulation (70) sur la partie rembourrée (32).

11. Disposition de sièges (2) selon la revendication 10, **caractérisée en ce que** le premier levier pivotant et le deuxième (60, 66) ont des longueurs différentes.

12. Disposition de sièges (2) selon l'une des revendications précédentes, **caractérisée en ce que** les axes d'articulation (62, 64, 68, 70) d'un quadrilatère articulé (56) sont disposés parallèlement les uns aux autres.

13. Disposition de sièges (2) selon l'une des revendications précédentes, **caractérisée en ce que** les axes d'articulation (62, 64, 68, 70) d'un quadrilatère articulé (56) sont disposés à angle droit par rapport à la direction des sièges (14).
